**Europäisches Patentamt**

**European Patent Office**

**Office européen des brevets**

(19)

(11) Veröffentlichungsnummer: **0 386 007 B1**

(12) # EUROPÄISCHE PATENTSCHRIFT

(45) Veröffentlichungstag der Patentschrift :
**31.07.91 Patentblatt 91/31**

(51) Int. Cl.$^5$ : **B60K 41/22**

(21) Anmeldenummer : **88907284.9**

(22) Anmeldetag : **16.08.88**

(86) Internationale Anmeldenummer :
**PCT/EP88/00727**

(87) Internationale Veröffentlichungsnummer :
**WO 89/01881 09.03.89 Gazette 89/06**

(54) **HILFSKRAFTBETÄTIGTE KUPPLUNGS- UND GANGSCHALTEINRICHTUNG.**

(30) Priorität : **22.08.87 DE 3728057**

(43) Veröffentlichungstag der Anmeldung :
**12.09.90 Patentblatt 90/37**

(45) Bekanntmachung des Hinweises auf die
Patenterteilung :
**31.07.91 Patentblatt 91/31**

(84) Benannte Vertragsstaaten :
**DE FR GB IT SE**

(56) Entgegenhaltungen :
**EP-A- 0 082 893**

(56) Entgegenhaltungen :
**EP-A- 0 166 823**
**DE-A- 3 536 559**
**GB-A- 2 057 607**
**GB-A- 2 112 100**

(73) Patentinhaber : **ZAHNRADFABRIK
FRIEDRICHSHAFEN AKTIENGESELLSCHAFT
Löwentaler Strasse 100 Postfach 2520
W-7990 Friedrichshafen 1 (DE)**

(72) Erfinder : **LEMP, Norbert
Rappertsweiler Strasse 40
W-7992 Tettnang (DE)**
Erfinder : **PETZOLD, Rainer
Oberhofstrasse 79
W-7990 Friedrichshafen (DE)**

## Beschreibung

Die Erfindung betrifft eine hilfskraftbetätigte Kupplungs- und Gangschalteinrichtung für Kraftfahrzeuggetriebe mit einer Gangvorwahl und einem vom Fahrer über die Kupplungsbetätigung am Kupplungspedal gesteuerten Gangwechsel und einer Rückmeldung, wenn nach der Schaltung der Gang im Getriebe eingelegt ist.

Solche Gangschalteinrichtungen, bei denen der Fahrer oder auch eine elektronische Einrichtung nur den Gang auswählt und die Schaltung im Getriebe selbst nicht mehr über ein Schaltgestänge direkt vom Fahrer, sondern von einer Hilfskraftbetätigungseinrichtung für die Kupplung durchgeführt wird, sind in vielen Ausführungen bekannt, z.B.

— ZF-Typenblatt Elektro-pneumatische Schaltung (ES) — Easyshift — für Synchrongetriebe F 43546/RT 34000 — 8.85,

— ZF-Typenblatt Automatisierte Vorwählschaltung (AVS) für Synchrongetriebe F 32437/RT 3431 — 8.85,

— Elektronisch-pneumatische Schaltung (EPS) Lastkraftwagen Daimler-Benz AG, Bestell-Nr. 6510302300, von 3.86,

— Scania — Leichter schalten mit Computer — Seite 4 Spalte 2 zweiter Absatz.

Bei allen diesen Ausführungen erfolgt das Öffnen und Schließen der Kupplung und damit des Antriebsstranges zwischen Motor und Getriebe weiterhin über das Kupplungspedal durch den Fahrer. Während bei einer Gangschaltung über ein Schaltgestänge der Fahrer infolge des direkten Kontaktes mit den Schaltmitteln im Getriebe erkennt, wenn der Gang eingelegt ist, fehlt bei einer hilfskraftbetätigten Schaltung diese Information, die in Verbindung mit der Betätigung des Schalthebels und des Schaltgestänges entsteht. Zur zeitlich richtigen Bedienung der Kupplung, insbesondere zum Schließen der Kupplung nach vollzogener Schaltung im Getriebe, sind akustische, optische und haptische — fühlbare — Rückmeldungen bekannt, damit möglichst schnell nach dem Abschluß des Schaltvorganges im Getriebe der Antriebsstrang durch den Fahrer wieder geschlossen werden kann. Aber gerade dieses Bestreben, den Antriebsstrang möglichst schnell zu schließen, kann auch zu Schwierigkeiten führen. Wenn der Fahrer z.B. die Rückmeldung, daß ein Gang im Getriebe eingelegt ist, nicht abwartet und die Kupplung schließt, ohne daß ein Gang geschaltet ist, befindet sich das Getriebe in Neutralstellung. In einem solchen Fall ist ja der Antriebsstrang nicht geschlossen, obwohl die Kupplung sich in der Schließstellung befindet. Eine erneut eingeleitete Gangschaltung über das Kupplungspedal wird in den häufigsten Fällen sogar erschwert, weil die Getriebemassen vor der Schaltung erneut synchronisiert werden müssen. Die vom Fahrer gewollte Beschleunigung der Schaltung wird also infolge einer solchen Handlungsweise verzögert oder durch weitere Fehlbedienungen wird eine Gangschaltung ganz verhindert.

Und schließlich ist aus der GB-A-2057607 eine Sicherheitseinrichtung bekannt, die mit einer hydraulischen Verriegelung das Schließen der Kupplung verhindert so lange im Getriebe kein Gang eingelegt ist. Der Fahrer kann aber ungehindert das Kupplungspedal zurücknehmen, auch wenn noch kein Gang eingelegt ist, so daß sich mit dem Einlegen des Ganges die Kupplung schlagartig schließt.

Es ist deshalb Aufgabe der Erfindung, eine hilfskraftbetätigte Kupplungseinrichtung nach dem Oberbegriff von Anspruch 1 so weiterzuentwickeln, daß das Kupplungspedal nur nach vollzogener Schaltung zurückgenommen werden kann.

Diese Aufgabe wird mit den kennzeichnenden Merkmalen vom Anspruch 1 erfüllt.

Mit der Anordnung einer Sicherheitseinrichtung im Bereich des Kupplungspedals und mit dem Festhalten dieses Pedals selbst, bis bei einer Gangschaltung wieder ein Gang eingelegt ist, wird in einfacher Weise eine Verstellung des Getriebes in die Neutralstellung verhindert. Bei einer beabsichtigten Rücknahme des Kupplungspedals wirken auf den Fuß des Fahrers keinerlei Rückstellkräfte mehr, so daß dieser sofort seine Fehlbedienung erkennt und korrigieren kann. Insbesondere kann er immer weich einkuppeln, weil er ja mit dem Fuß in der Öffnungsstellung des Kupplungspedals verbleibt oder nur kurzfristig oder vorrangig nur geringfügig diese Öffnungsstellung verläßt.

Zusätzliche Einrichtungen für das weiche Einkuppeln sind auch bei einer Fehlbedienung nicht erforderlich, weil er diese sofort erkennt und nicht erst in der Ausgangsstellung des Kupplungspedals.

Damit das Kupplungspedal beim Abstellen des Fahrzeuges ohne eingelegten Gang in die Ausgangsstellung zurückgenommen werden kann, ist es relativ einfach, die Sicherheitseinrichtung mit einem Fahrhebel oder Fahrschalter zu verbinden, der in der Vorwärtsfahrstellung zum Zwecke einer Gangschaltung nicht verstellt wird.

Die Sicherheitseinrichtung kann eine Kraft und/oder formschlüssige Halteeinrichtung sein und elektrisch oder über Druckmittel vorrangig über Druckluft betätigt werden. Eine Betätigung über Druckluft ist vorteilhaft, weil eine Druckluftquelle für die Hilfskraftbetätigung der Kupplung bereits zur Verfügung steht. Besonders vorteilhaft ist auch eine z.B. sägezahnförmige Gestaltung der Halte- oder Klemmflächen, weil mit geringen Klemmkräften die doch erheblichen Rückstellkräfte am Kupplungspedal über Formschluß gehalten werden und bei

EP 0 386 007 B1

genügend feiner Verzahnung praktisch fast jede Stellung des Kupplungspedals geklemmt werden kann.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Weitere Einzelheiten der Erfindung werden anhand von Zeichnungen und Ausführungsbeispielen erläutert. Es zeigen :

Fig. 1    eine Hilfskraftbetätigungseinrichtung für eine Kupplung mit einer Sicherheitseinrichtung im Bereich des Kupplungspedals ;

Fig. 2    eine Sicherheitseinrichtung als kraft- oder formschlüssige Halteeinrichtung mit Druckmittel betätigt;

Fig. 3    eine kraft- und formschlüssige Halteeinrichtung mit einem Magneten betätigt.

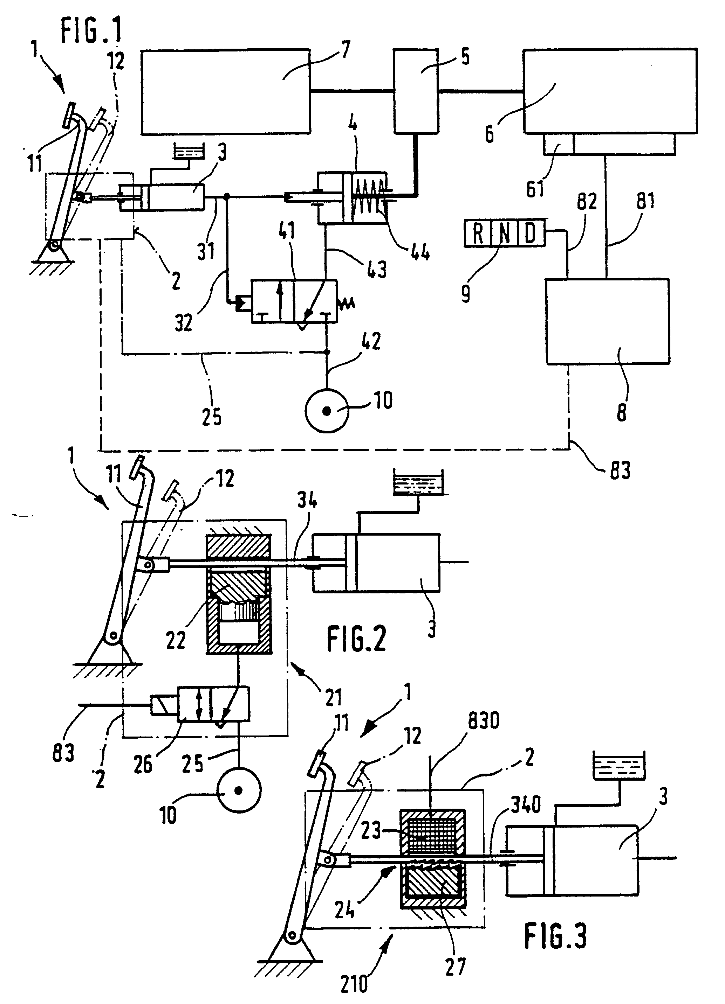

Zwischen dem Antriebsmotor 7 und einem Kraftfahrzeuggetriebe 6 ist in Fig. 1 eine Kupplung 5 angeordnet, die über ein Kupplungspedal 1 über eine Hilfskraft betätigt wird. Dazu ist das Kupplungspedal 1 mit einem Geberzylinder 3 mechanisch verbunden. Von diesem führt eine Druckleitung 31 zum Verstellzylinder 4 für die Kupplung 5 und eine Druckleitung 32 zum Steuerventil 41, das über die Luftdruckleitungen 42 mit einer Druckmittelquelle 10 und die Luftdruckleitung 43 mit dem Verstellzylinder 4 verbunden ist. Eine weitere Luftdruckleitung 25 führt von der Druckmittelquelle 10 zur Sicherheitseinrichtung. Mit 8 ist eine elektronische Einheit bezeichnet, die über elektrische Leitungen 81, 82 83 zumindest mit dem Getriebe 6 der Stelleinrichtung 9 und der Sicherheitseinrichtung 2 verbunden ist. Die Stelleinrichtung 9, ist vorrangig ein Wählhebel oder -schalter, mit den Verstellmöglichkeiten in die Vorwärts-D-, Rückwärts-R-Fahrt und Neutralstellung N, In Fig. 2 ist die Sicherheitseinrichtung 2 als kraft- und/oder formschlüssige Halteeinrichtung 21 ausgebildet. Der Klemm- oder Haltedruck erfolgt über einen druckmittelbetätigten Zylinder 22, vorrangig einen Luftdruckzylinder, der über ein Magnetventil 26 mit der Druckmittelquelle 10 oder mit der Entlüftung dieses Magnetventils verbunden werden kann. In Fig. 3 ist die Sicherheitseinrichtung als kraft- und formschlüssige Haltevorrichtung 210 ausgebildet, die Klemmelemente 24 an der Kolbenstange 340 und den Backen 27 sind sägezahnartig gestaltet und ergeben bei Klemmung über den Elektromagneten 23 eine formschlüssige Verriegelung. Infolge der relativ feinen Verzahnung der Klemmelemente kann die kraft- und formschlüssige Klemmung über den gesamten Verstellweg erfolgen. Über eine geeignete Profilierung der Klemmelemente ist es möglich, das Kupplungspedal 1 in der betätigten Stellung mit relativ geringen Klemmkräften festzuhalten.

Die Kupplungsbetätigung wirkt wie folgt : Mit der Betätigung des Kupplungspedals 1 aus der Ruhestellung 11 heraus wird in dem Geberzylinder 3 Druckmittel über die Leitung 31 und 32 zum Verstellzylinder 4 der Kupplung 5 und zum Steuerventil 41 geleitet. Damit wird die Entlüftung im Steuerventil geschlossen und Druckluft aus der Druckmittelquelle 10 über die Leitung 42, 43 zum Verstellzylinder geleitet. Die Druckluft überdrückt die Rückstellfeder 44 vom Verstellzylinder 4 und die nicht dargestellten Schließfedern der Kupplung 5 und öffnet diese. Gleichzeitig mit der Betätigung des Kupplungspedals von der Ruhestellung 11 in die betätigte Stellung 12 wird, wie bekannt, das Getriebe 6 in Neutralstellung verstellt und der über eine Vorwahl oder über eine Elektronik neu ausgewählte Gang eingelegt. In der Zeit, in der im Getriebe 6 kein Gang eingelegt ist, wird über einen Schalter 61 die Sicherheitseinrichtung 2 aktiviert und das Kupplungspedal in der betätigten Stellung 12 festgehalten. Wie Fig. 2 zeigt, ist dies möglich über eine kraft- und/oder formschlüssige Halteeinrichtung 21, die z.B. die Kolbenstange 34 festhält. Die Information, daß kein Gang im Getriebe eingelegt ist, wird über den Schalter 61 über die elektronische Einheit 8 oder auch direkt an das Magnetventil 26 geleitet, und die Klemmung erfolgt dabei über den Druckmittelzylinder 22. Mit dem Schalter 61 kann aber auch über die elektronische Einheit 8 oder direkt ein Elektromagnet 23 geschaltet werden, der die Klemmung und formschlüssige Einrastung der Klemmelemente 24 bewirkt. Während der Klemmung der Sicherheitseinrichtung 2 verspürt der Fahrer am Kupplungspedal keinerlei Rückstellkräfte mehr. Er kann so in einfacher Weise erkennen, daß im Getriebe kein Gang eingelegt ist, darüber hinaus wird die Rückstellung des Kupplungspedals sicher verhindert. Mit der Einlegung eines Ganges im Getriebe entfällt die Aktivierung des Magnetventils 26 bzw. des Elektromagneten 23 und beide werden in ihre Ausgangsstellung, z.B. über Federkraft, die mit der Aufhebung der Klemmung verbunden ist, zurückgeführt. Die nun wieder wirksamen allgemein bekannten Rückstellkräfte aus der Kupplung 5 und der Feder 44 von dem Verstellzylinder 4 werden vom Fahrer als spürbares — haptisches — Signal erkannt. Der Fahrer kann nunmehr in gewohnter Weise wieder einkuppeln und je nach Erfordernis schneller oder langsamer das Kupplungspedal in die Ruhestellung 11 zurückbringen. Außerhalb einer durchzuführenden Gangschaltung kann das Kupplungspedal 1 auch durch eine Betätigung der Stelleinrichtung 9 z.B. in die Ruhestellung 11 gebracht werden — Sicherheitseinrichtung 2 wird überbrückt in der Stellung Neutral —, damit ein Abstellen des Fahrzeuges ohne eingelegten Gang möglich ist.

3

**Patentansprüche**

1. Hilfskraftbetätigte Kupplungs- und Gangschalteinrichtung für ein Kraftfahrzeuggetriebe (6) mit einer Gangvorwahl und einem vom Fahrer über die Kupplungsbetätigung am Kupplungspedal (1) gesteuerten Gangwechsel und einer Rückmeldung für den Fahrer, wenn nach der Schaltung der Gang im Getriebe (6) eingelegt ist, sowie einer Sicherheitseinrichtung (2), die zwischen dem Kupplungspedal (1) und dem Verstellzylinder (4) für die Kupplung (5) angeordnet ist und das Einrücken der Kupplung verhindert, wenn im Getriebe kein Gang eingelegt ist, dadurch **gekennzeichnet,** daß eine mit dem Kupplungspedal (1) mechanisch verbundene Sicherheitseinrichtung (2) in Form einer kraft— und/oder formschlüssigen Halteeinrichtung (21, 210) angeordnet ist, die das betätigte Kupplungspedal (Stellung 12) erst zur Rückstellung (Ruhestellung 11) freigibt, wenn im Getriebe (6) ein Gang eingelegt oder über eine nicht mit der Gangschalteinrichtung verbundene Stelleinrichtung (9) das Getriebe (6) in die Neutralstellung verstellt worden ist.

2. Hilfskraftbetätigte Kupplungseinrichtung nach Anspruch 1, dadurch **gekennzeichnet,** daß die Stelleinrichtung ein Wählhebel oder Wählschalter (9) für die Verstellung in die Vorwärts-D-, Rückwärts-R-Fahrt oder in die Neutralstellung (9), in der das Fahrzeug angelassen wird, ist.

3. Hilfskraftbetätigte Kupplungseinrichtung nach Anspruch 1, dadurch **gekennzeichnet,** daß die kraft- und-/oder formschlüssige Halteeinrichtung (21) über einen mit Druckmittel betätigten Zylinder (22) in der Haltestellung gehalten wird.

4. Hilfskraftbetätigte Kupplungseinrichtung nach Anspruch 1, dadurch **gekennzeichnet,** daß die kraft- und formschlüssige Halteeinrichtung (210) über einen Elektromagneten (23) in der Klemmstellung gehalten wird.

5. Hilfskraftbetätigte Kupplungseinrichtung nach Anspruch 4, dadurch **gekennzeichnet,** daß eine kraft- und formschlüssige Halteeinrichtung (210) über eine geeignete Formgebung der Klemmelemente (24) in einer Vielzahl von Stellungen vorrangig formschlüssig gehalten wird.

6. Hilfskraftbetätigte Kupplungseinrichtung nach Anspruch 1 dadurch **gekennzeichnet,** daß in Verbindung mit der Sicherheitseinrichtung (2) und der allgemein bekannten Rückstelleinrichtungen für die Kupplung (5) und das Kupplungspedal (1) nach dem Einlegen des Ganges im Getriebe der Fahrer ein haptisches Signal in Form der Kupplungsrückstellkräfte erhält, so daß keine gesonderte Einrichtung für die Erkennung, daß ein Gang eingelegt ist, notwendig ist.

**Claims**

1. Servo clutch and gearshift device for a motor vehicle transmission (6) with a gear preselection, a gear change which is controlled by the driver via the clutch operation at the clutch pedal (1), an indication for the driver when the gear is engaged in the transmission (6) following the gearshift and a safety device (2), which is arranged between the clutch pedal (1) and the shifting cylinder (4) for the clutch (5) and prevents the clutch from engaging when no gear is engaged in the transmission, characterised in that a safety device (2) is provided which is mechanically connected to the clutch pedal (1) and is in the form of a non-positive and/or positive retaining device (21, 210), which only releases the operated clutch pedal (position 12) so that it can be returned (rest position 11) when a gear has been engaged in the transmission (6) or the transmission (6) has been shifted into the neutral position by a control device (9), which is not connected to the gearshift device.

2. Servo clutch device according to claim 1, characterised in that the control device is a selector lever or selector switch (9) for shifting into the forward-D-drive, reverse-R-drive or into the neutral position (9), in which the vehicle is started.

3. Servo clutch device according to claim 1, characterised in that the non-positive and/or positive retaining device (21) is held in the retaining position by a cylinder (22) which is operated by pressure medium.

4. Servo clutch device according to claim 1, characterised in that the non-positive and positive retaining device (210) is held in the clamping position by an electromagnet (23).

5. Servo clutch device according to claim 4, characterised in that a non-positive and positive retaining device (210) is primarily held in a positive manner in a plurality of positions by appropriately forming the clamping elements (24).

6. Servo clutch device according to claim 1, characterised in that, in conjunction with the safety device (2) and the generally known return devices for the clutch (5) and the clutch pedal (1), the driver receives a haptic signal in the form of the clutch return forces after the gear has been engaged in the transmission, so that a separate device for detecting the engagement of a gear is unnecessary.

## Revendications

1. Dispositif assisté d'embrayage et de changement de vitesses pour une boîte de vitesses (6) de véhicule à moteur, comportant une présélection de vitesse, un changement de vitesses commandé par le conducteur au moyen de l'actionnement de la pédale d'embrayage (1) et un signal de quittance délivré au conducteur quand la vitesse est engagée après commutation dans la boîte de vitesses (6), ainsi qu'un dispositif de sécurité (2) qui est interposé entre la pédale d'embrayage (1) et le vérin d'actionnement (4) de l'embrayage (5) et qui empêche l'enclenchement de l'embrayage quand aucune vitesse de la boîte n'est engagée, **caractérisé** en ce qu'un dispositif de sécurité (2) raccordé mécaniquement à la pédale d'embrayage (1) est prévu sous la forme d'un dispositif de retenue positive et/ou à friction (21, 210) qui ne libère la pédale d'embrayage après actionnement (position 12) pour la laisser revenir en arrière (position de repos 11), que si une vitesse de la boîte (6) est engagée ou si la boîte (6) est mise en position neutre au moyen d'un organe de commande (9) qui n'est pas lié au dispositif de changement de vitesses.

2. Dispositif selon la revendication 1, **caractérisé** en ce que ledit organe de commande est un levier de sélection ou un sélecteur (9) pour commander la position (9) de marche avant D, de marche arrière R ou neutre dans laquelle le véhicule est mis en marche.

3. Dispositif selon la revendication 1, **caractérisé** en ce que le dispositif de retenue positive et/ou à friction (21) est maintenu en position de retenue au moyen d'un vérin (22) à fluide sous pression.

4. Dispositif selon la revendication 1, **caractérisé** en ce que le dispositif de retenue positive et à friction (210) est maintenu en position de blocage au moyen d'un électro-aimant (23).

5. Dispositif selon la revendication 4, **caractérisé** en ce qu'un dispositif de retenue positive et à friction (210) est maintenu principalement de manière positive dans une série de positions, grâce à une conformation appropriée des éléments de blocage (24).

6. Dispositif selon la revendication 1, **caractérisé** en ce que, en combinaison avec le dispositif de sécurité (2) et les dispositifs connus de rappel de l'embrayage (5) et de la pédale d'embrayage (1), le conducteur reçoit un signal tactile sous la forme des forces de rappel de l'embrayage après l'engagement de la vitesse dans la boîte, de sorte qu'un dispositif séparé pour indiquer qu'une vitesse est engagée n'est pas nécessaire.

FIG.1

FIG.2

FIG.3